# EUROPEAN PATENT SPECIFICATION

(11) **EP 4 688 672 B1**
(45) Date of publication and mention of the grant of the patent: **28.10.2026**
(21) Application number: 24729834.2
(22) Date of filing: 28.05.2024
(51) Int. Cl.: C03B 3/02, C03B 5/03, C03B 5/225, C03B 5/235, C03C 1/00, F23D 99/00

(54) **GLASS MELTING PROCESS WITH LOW CO2 EMISSION**
GLASSCHMELZVERFAHREN MIT NIEDRIGER CO2-EMISSION
PROCÉDÉ DE FUSION DU VERRE À FAIBLE ÉMISSION DE CO2

(30) Priority: 07.06.2023 EP 23177869
(43) Date of publication of application: 11.02.2026
(73) Proprietor: AGC Glass Europe, 1348 Louvain-La-Neuve (BE)
(72) Inventor: BIOUL, François, 6041 Gosselies (BE); BOURGEOIS, Nicolas, 6041 Gosselies (BE); BOGAERTS, Michel, 6041 Gosselies (BE); HABIBI, Zakaria, 6041 Gosselies (BE); FASILOW, Fabrice, 6041 Gosselies (BE)
(74) Representative: AGC Glass Europe
(86) International application number: PCT/EP2024/064663
(87) International publication number: WO 2024/251566

(56) References cited:
- WO-A1-2018/039398
- JP-B2- 7 153 241
- US-A1- 2004 168 474

## Description

### FIELD OF THE INVENTION

The present invention relates to a glass melting process aimed at continuously supplying molten glass to flat glass forming installations such as float or rolling installations. In particular, the present invention relates to a glass melting process that provides a lot of advantages, especially in terms of CO₂ emissions and in terms of sustainability.

The invention is more particularly related, but not limited, to melting process for flat glass involving large production capacities, i.e. up to 1000 tons/day or more.

### BACKGROUND OF THE INVENTION

The global warming and the requirements for CO₂ emissions reduction increase the pressure on glass manufacturers, as well as the energy prices and CO₂ taxes that could become soon a severe threat on competitiveness in the glass sector.

In that context of urgent action to reduce carbon emissions, the glass industry has invested a lot since years in the decarbonization of its manufacturing processes, with the view to produce glass goods that are fit for a sustainable, resource-efficient, low-carbon society.

For enabling the transition, the glass sector has already identified a number of solutions/technologies to approach that ambitious goal, as, for example, use of electricity as energy source, use of alternative and greener sources of energy like H₂ or biogas, use of alternative raw materials, increase use of cullet as raw materials, heat recovery, CO₂ capture utilization and storage (or CCUS),...

Nevertheless, all these technologies are either accompanied by severe drawbacks or issues to practical implementation or are not viable from an economical point of view. There is therefore still an urgent need to have a glass melting process that allows to decrease drastically the amount of CO₂ emitted but while staying economically acceptable for glass manufacturers.

*As to the use of electricity* as source of energy: it is known that furnace using electrical energy to melt the glass raw materials show a decrease of CO₂ emissions but also a decrease of total energy consumption. In such a configuration, the melting furnace comprises electrodes that allow an electric current/power to pass through and heat the bath of molten glass from its bulk. However, glass melting furnaces where the heating power is entirely supplied by electricity have not been adopted in the flat glass art when a high-quality glass is required, due to serious temperature and glass convection/flow issues.

Hence, conventional glass melting furnaces for flat glass are generally only "boosted" with electricity, in a so-called "hybrid" configuration combining combustion heating means, namely burners, and electrical heating means, namely immersed electrodes. In such known "electro-boosted combustion furnaces", the electrical input fraction is nevertheless limited to maximum 10-15% of the total energy input, preventing to fully benefit from the advantages in terms of energy consumption of electrical melting.

More recently, a new specific design of furnace, described in European patent application EP21200998.9, allows to reach significantly higher electrical input fraction, i.e. above 50%, in an "hybrid" furnace.

*As to the use of alternative and greener sources of energy like hydrogen H₂ or biogas:* even if it is clear that they will bring advantages in term of environment/energy consumption/CO₂ emissions, serious limitations prevents their extensive use in the glass industry (lack of availability of biogas, and expensiveness of H₂ that makes it a non-economically viable solution so far as the only source of energy to melt glass raw materials).

*As to heat recovery :* Waste heat recovery from flue gas is already extensively applied in the glass industry to preheat the combustion air entering the furnace at temperatures higher than 1000°C, or gas and oxygen ("Hotox") at temperatures higher than 400 and 500°C respectively. Next to that, waste heat from flue gas can also be used to preheat the vitrifiable materials, especially cullet. Nevertheless, it is known that pre-heating raw materials/cullet cannot be coupled with electrical melting as the temperature of flue gas released by raw materials in this case is too low.

US 2004/168474 A1 discloses a furnace, with integrated refining zone, and a conditioning zone. The furnace, fitted with atmospheric burners, fed with batch materials in powder form and cullet, produces a main glass flowing through the waist into the conditioning zone, the said main glass feeding, via the feeder, a float glass forming station for producing flat glass. The feeder receives an auxiliary glass produced in a furnace fitted with submerged burners, the glass from which is refined and heated by submerged burners. The auxiliary furnace is fed with cullet or conventional batch composition. The two (main and coloured) glasses are mixed in the feeder which is provided with mechanical homogenizers. The main furnace has a floor area ranging from 200 m 2 to 600 m 2. The conditioning zone or working end for thermal conditioning the floor area may be from 50 m 2 to 300 m2, depending on the size of the installation.

### OBJECTIVE OF THE INVENTION

It is an objective of the present invention to overcome the disadvantages described above with respect to the state of the art and resolving the technical problem, i.e. by providing a glass melting process to produce flat glass, showing a decreased global energy consumption and a decreased CO₂ emissions compared to a classical melting furnace.

It is a further objective of the present invention to provide a glass melting process to produce flat glass, showing a decreased global energy consumption and a decreased CO₂ emissions together with an improved lifetime and less glass defects originated from refractories, compared to classical melting furnaces.

It is a further objective of the present invention to provide a glass melting process to produce flat glass, showing a decreased global energy consumption and a decreased CO₂ emissions together with a good sustainability (esp. through the use of cullet, even of poor quality, as a part of vitrifiable materials).

### DESCRIPTION OF THE INVENTION

The present invention relates to a process for melting vitrifiable materials to produce flat glass, comprising the steps of :
- providing a furnace comprising (i) at least one main melting tank comprising electrical heating means, (ii) at least one auxiliary melting tank, (iii) a fining tank provided with oxycombustion heating means, (iv) at least one neck separating the at least one main melting tank and the fining tank, (v) inlet mean(s) located at the at least one main melting tank, (vi) outlet mean(s) located downstream of the fining tank;
- charging vitrifiable materials, comprising raw materials and optionally cullet, in the at least one main melting tank with the inlet mean(s);
- charging cullet in the at least one auxiliary melting tank;
- melting the charged vitrifiable materials in the at least one main melting tank by heating with the electrical heating means and flowing the melt to the fining tank through the neck;
- melting the charged cullet in the at least one auxiliary melting tank;
- fining the melt in the fining tank by heating with the oxy-combustion heating means alimented with gas and/or hydrogen;
- flowing the melt from the fining tank to a working zone trough the outlet mean(s);
wherein
(i) the electrical input fraction of said furnace ranging from 50% to 85%,
(ii) the total amount of cullet being at least 10% in weight of the total amount of vitrifiable materials, and
(iii) there is further a step of flowing the melt from the at least one auxiliary melting tank to the neck or to the fining tank.

Hence, the invention is based on a novel and inventive approach. In particular, the inventors have found that by combining, in a glass melting process to produce flat glass:
- the use of a furnace with a specific segmented design (separating an electrically-heated main melting zone and a combustion-heated fining zone),
- the use of oxygen as comburant,
- the use of gas and/or hydrogen as combustible,
- the use of a minimum amount of cullet as a source,
- the use of a step of melting cullet, at least partially, in an auxiliary melter that flows downstream of the melting tank (esp. in the neck or in the fining tank), and
- the use of a specific electrical input fraction,
it is possible to obtain, at the same time :
- a significant decrease of the total energy consumption;
- a significant decrease of the total CO₂ production;
- an improved lifetime of the furnace; and
- a good sustainability (esp. through the use of cullet, even of poor quality, as a part of vitrifiable materials/sources).

In present specification and claims, it is well understood by the person skilled in the art that, as used herein the terms "a", "an" or "the" means "at least one" and should not be limited to "only one" unless explicitly indicated to the contrary. Also, when a range is indicated, the extremities are included. In addition, all the integral and subdomain values in the numerical range are expressly included as if explicitly written. Finally, the terms "upstream" and "downstream" refer to the flow direction of the glass and are to be understood with their common sense, namely as meaning along the averaged moving direction of the glass melt, from the inlet mean(s) to the outlet mean(s). The expression "upstream part" is understood to mean the first upstream third of the length, said length being located along the horizontal and longitudinal axis of the furnace. The expression "downstream part" is understood to mean the last downstream third of said length.

The invention concerns a process for melting vitrifiable materials to produce flat glass. By "vitrifiable materials" herein, it is meant raw materials and cullet that are charged and melted in the whole furnace (namely, in the at least one main melting tank and in the at least one auxiliary melting tank).

Other features and advantages of the invention will be made clearer from reading the following description of preferred embodiments and figure, given by way of simple illustrative and non-restrictive examples.

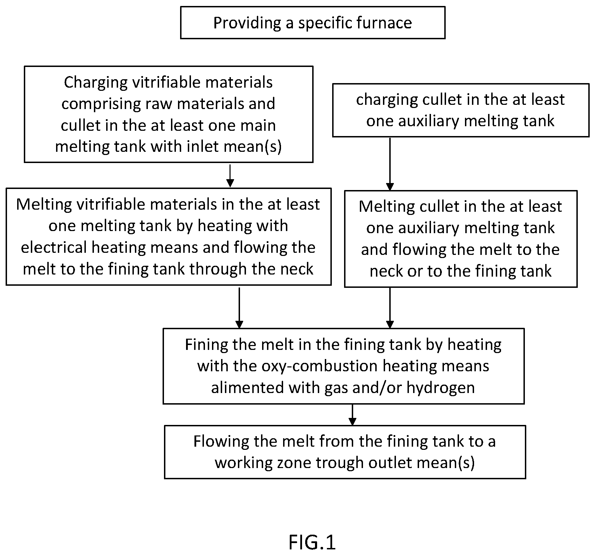

FIG. 1 is a flowchart of an embodiment of the process of the invention.

According to the invention and as illustrated at FIG.1, the process comprises a step of providing a furnace comprising (i) at least one main melting tank comprising electrical heating means, (ii) at least one auxiliary melting tank, (iii) a fining tank provided with oxy-combustion heating means, (iv) at least one neck separating the at least one main melting tank and the fining tank, (v) inlet mean(s) located at the at least one main melting tank, (vi) outlet mean(s) located downstream of the fining tank (for the melted glass to flow to a working zone).

According to the invention and as commonly adopted in the glass art, by "melting tank", it is meant a tank defining a zone where the vitrifiable materials (namely raw materials and/or cullet) are charged and melted by heating, and comprising, when the furnace is in process, a melt and a "blanket" of unmelted materials that floats on the melt and is progressively melted.

According to the invention and as commonly adopted in the glass art, by "fining tank", it is meant a tank defining a zone where there is no more "blanket" of unmelted vitrifiable materials that floats on the melt and where the glass melt is heated at temperatures possibly higher than melting tank temperatures (generally above 1400°C or even above 1450°C), in order to refine the glass (mainly by eliminating major part of bubbles). This fining tank is also commonly called "clarification tank" in the art.

According to the invention, by a "neck" separating the at least one main melting tank and the fining tank, it is meant :
- a narrowing in width compared to the melting tank;
- a narrowing in width and in (crown) height compared to the fining tank; and
- the opening of the neck is only partially under the glass melt/blanket free surface, then leaving a free opening above the glass melt/blanket.

The crown of the neck according to the invention may be at a lower height that the crown of the main melting tank or essentially at the same height. Next to the advantages of the specific furnace design with a neck in combination with the other features of the invention, it also allows a wider opening and therefore lower glass velocities leading to lower refractory corrosion and wear. This point can advantageously improve furnace lifetime. Moreover, it provides a free surface that can be used to control glass temperature flowing out of the neck (important to control convection loops in the fining tank), and to possibly introduce skimbar/barriers introduced from the sides of the neck (can be used to control convection in the neck, and possibly avoid backward flow from fining to melting zone).

This furnace design, with a segmentation of the main melting tank(s) and fining tank, brings a lot of advantages in favour of energy consumption/CO₂ emissions and in favour of mechanical stability/ lifetime of the furnace. In particular, advantageously in the context of present invention, this furnace with its specific segmented design allows to deal with flue gas from main melting tank(s) and flue gas from fining tank independently, if desired.

According to a particular embodiment, the furnace of the invention is defined by the following: $0.1 * W 2 \leq W 3 i \leq 0.6 * W 2 ;$ $W 1 i \geq 1.4 * W 3 i ;$
W1i being the width of the at least one main melting tank;
W2 being the width of the fining tank;
W3i being the width of the at least one neck.

This last specific design is advantageous to find a good compromise between two opposite requirements : from one side, the neck(s) between the melting zone(s) and the fining zone should be ideally as narrow as possible in order to (1) decrease the opening between melting and fining superstructures/crowns and (2) generate an obstacle to global glass melt convection strength in the main melting tank(s), and, from the other side, the neck should be ideally as wide as possible in order to limit glass velocity inside the neck(s), to limit neck refractory wall wear/corrosion.

According to the invention, the furnace may comprise one main melting tank and one neck; or two main melting tanks and two necks; or even three main melting tanks and three necks. Reference is made to the European patent application EP21200998.9 describing extensively embodiments of these specific designs.

For example, in a "two-melting tanks" configuration, the furnace may comprise :
(i) a first main melting tank,
(ii) a second main melting tank;
(iii) a fining tank,
(iv) a neck Ni separating first main melting tank and the fining tank;
(v) a neck Nii separating second main melting tank and the fining tank;
(vi) at least one inlet mean located at the first main melting tank;
(vii) at least one inlet mean located at the second main melting tank;
(viii) at least one outlet mean located at the fining tank.

According to this specific embodiment, the furnace may be advantageously defined by the following: $0.1 * W 2 \leq W 3 i \leq 0.6 * W 2 ;$ $0.1 * W 2 \leq W 3 ii \leq 0.6 * W 2 ;$ $W 1 i \geq 1.4 * W 3 i ;$ $W 1 ii \geq 1.4 * W 3 ii ;$
W1i being the width of first main melting tank;
W1ii being the width of second main melting tank;
W2 being the width of the fining tank;
W3i being the width of neck Ni;
W3ii being the width of neck Nii.

Preferably, the total surface area of the main melting tank(s) ranges from 25 to 400 m². Preferably also, according to the invention, the surface area of the fining tank ranges from 25 to 400 m².

In an advantageous embodiment of the invention, the furnace comprises at least one main melting tank enlarged laterally and equipped with at least two inlet means, located on both sides of the melting tank based on the location of the neck, either at the lateral sides or as top batch chargers.

Preferably, and as known in the art, the inlet mean(s) is/are either located upstream of the at least one melting tank (either in the width of said tank or laterally in its length) or located at the top of the at least one melting tank ("top batch charger").

According to the invention and as illustrated at FIG.1, the process comprises a step of charging vitrifiable materials, comprising raw materials and optionally cullet, in the at least one main melting tank with the inlet mean(s).

According to an embodiment, if cullet is charged in the at least one main melting tank, this may be done through same inlet mean(s) as those used for the raw materials, or, alternatively, independently of the raw materials through different inlet mean(s).

According to the invention and as illustrated at FIG.1, the process comprises a step of charging cullet in the at least one auxiliary melting tank.

According to the invention, the total amount of cullet is at least 10% in weight of the total amount of vitrifiable materials (namely, the vitrifiable materials charged in the at least one main melting tank and the cullet charged in the at least one auxiliary melting tank). Preferably, the total amount of cullet is at least 20% in weight of the total amount of vitrifiable materials. More preferably, the total amount of cullet is at least 30% in weight of the total amount of vitrifiable materials, or even, very preferred, at least 40% in weight. This is advantageous as it allows to reduce the CO₂ production/emission of the process of the invention (due to a reducing of the emission occurring from the decarbonization of the carbonate raw materials). Possibly, the total amount of cullet is at most 90% in weight of the total amount of vitrifiable materials, or even at most 80% in weight.

For the sake of clarity, according to the invention, the total amount of cullet charged in the furnace of the invention is either fully and only charged in the at least one auxiliary melting tank (meaning that only raw materials from the vitrifiable materials of the invention are charged in the at least one main melting tank) or, alternatively, the total amount of cullet is split between the at least main melting tank and the at least one auxiliary tank (this means that only a part of the cullet is melted in the at least one auxiliary melting tank, the remaining part of the cullet being melted in the at least one main melting tank). According to this last embodiment, for example, the part of the cullet that is considered as "polluted" or not sufficiently clean is melted in the at least one auxiliary melting tank and the remaining "clean" part of the cullet is charged, together with raw materials, and melted in the at least one main melting tank.

For the sake of clarity also, according to the invention, at least a part of the cullet (namely a part of the total amount of cullet charged in the furnace of the invention) is charged in the at least one auxiliary melting tank, meaning that essentially cullet is charged in the at least one auxiliary melting tank. By "essentially cullet", it means that cullet is charged alone in the at least one auxiliary melting tank or together with small amounts of compounds (for example, up to 5 or 10 wt% of charged materials), i.e. helping to adjust properties of the melt in the auxiliary melting tank. For example, some soda and/or calcium oxide may be added together with the cullet in order to adjust the viscosity of the melt/melted cullet.

According to an embodiment wherein the total amount of cullet is split between the at least main melting tank and the at least one auxiliary tank, the cullet charged in the at least one auxiliary melting tank represents at least 2% in weight of the total amount of cullet charged in the furnace of the invention and, preferably, at least 5% in weight, or even at least 10% in weight, and more preferably, at least 20% in weight.

According to the invention and as illustrated at FIG.1, the process comprises a step of melting the charged cullet in the at least one auxiliary melting tank and flowing the melt (namely, the melted cullet) to the neck or to the fining tank. For the sake of clarity, this means that the at least one auxiliary melting tank according to the invention is connected (or, in other words, flows) to the neck or to the fining tank.

Such a configuration where the at least one auxiliary melting tank flows downstream of the main melting tank, namely to the neck or to the fining tank, is advantageous at different levels :
- This improves energy efficiency : The melt exiting/flowing from the auxiliary melting tank (typically 1350°C) is generally colder than the melt present in the main melting tank (typically 1450°C). The melt present in the main melting tank is then cooled down (typically from 1450 to 1350°C) before or when entering the fining tank. From an energy viewpoint, it is then inefficient to flow the molten cullet to the main melting tank where it would be reheated (by +100°C) and then cooled down (by -100°C) before or when entering the fining tank. By flowing the molten cullet to the fining zone, it is directly at the desired temperature, without the need of the above-mentioned heating/cooling cycle;
- This reduces the flow of molten glass through the main melting tank, as a part of the total vitrifiable materials (namely, in the form of cullet) is charged downstream (in the auxiliary melting tank). Consequently, the residence time of the glass in the main melting tank is increased, leading to better dissolution of raw materials (and optionally cullet) and to a better evacuation of bubbles from the glass melt present in the main melting tank. Moreover, the average glass speed in contact with refractory materials (walls and bottom) is reduced in the main melting tank, leading to a reduction of wear and corrosion of these refractories. It results in an increased furnace lifetime and less defects originated from refractories in the final glass products; and
- This avoids the potential generation of gases when mixing two glass melts with different redox/compositions in the case of a cold-top melting tank (in the case where the auxiliary melting tank would flow to the main melting tank). Indeed, such a gas generation may impair the melting process, as a gas layer may be formed between the glass melt and the layer of vitrifiable materials. This gas layer could then act as an insulator leading to a significant reduction of melting rate, thereby perorating energy consumption.

Advantageously, the process of the invention comprises a step of melting the charged cullet in the at least one auxiliary melting tank and flowing the melt to the neck. This allows to introduce the molten cullet/the melt in a symmetrical way, regarding the complete furnace, leading to better glass homogeneity in the fining tank and in the final glass product.

When the at least one auxiliary melting tank flows (or is connected) to the fining tank, the at least one auxiliary melting tank is preferably connected at the upstream part of the fining tank, and more preferably, as upstream as possible of the fining tank.

When the at least one auxiliary melting tank flows (or is connected) to the fining tank, this can be done through a connection commonly known in the art, preferably a throat or a neck.

When the at least one auxiliary melting tank flows (or is connected) to the neck, this is preferably done through a connection commonly known in the art, like a throat.

Alternatively and advantageously, when the at least one auxiliary melting tank flows (or is connected) to the neck, the flowing can be done from a height higher than the top of the neck, the melt coming from the auxiliary melting tank flowing by gravity on the upper surface of the melt already present in the neck (and coming from the main melting tank). This embodiment reduces the required space around the neck at the ground level, and make easier operations inside the neck (for equipment introduction for instance). This could also advantageously be combined with purification process that could be gravity-flow process.

According to an embodiment, the furnace of the invention may comprise more than one auxiliary melting tank, for example, two or three auxiliary melting tanks. In such a case, each auxiliary melting tank may flow/be connected independently to the neck or to fining tank. For example, if the furnace comprises two auxiliary melting tanks, one auxiliary melting tank flows to the neck and the other flows to the fining tank, or both flow to the neck, or both flow to the fining tank. In an alternative embodiment, when the furnace of the invention comprises more than one auxiliary melting tank, for example, two or three auxiliary melting tanks, they may be arranged in series (one after the other). For example, if the furnace comprises three auxiliary melting tanks arranged in series, the first one (the most upstream from the neck or fining tank) flows to the second one that flows to the last one that finally flows to the neck or to the fining tank.

According to the invention, the step of melting the charged cullet in the at least one auxiliary melting tank may be carried out with electrical heating means like, for example, immersed electrodes and/or with combustion means like, for example, aerial burners or immersed combustion means.

According to an embodiment, the step of melting cullet in the at least one auxiliary melting tank according to the invention may include one or several step(s) of purifying said cullet. For example, metallic compounds present in the cullet can be eliminated in this auxiliary melting tank, by using reductants (like coke or anthracite) to produce molten metal that will separate from the glass melt by decanting at the bottom of the auxiliary melting tank, while the obtained "purified" glass melt could flow from the top towards the neck or the fining tank.

According to the invention and as illustrated at FIG.1, the process comprises a step of melting the charged vitrifiable materials, comprising raw materials and optionally cullet, in the at least one main melting tank by heating with the electrical heating means and flowing the melt to the fining tank through the neck.

Electrical heating means according to the invention are possibly located at the bottom of the at least one main melting tank and preferably in such a case, composed of immersed electrodes. The "bottom electrodes" are advantageously arranged in grid pattern (checkerboard) multiple of 3 or 2, in order to facilitate connection to transformers and electric current balance.

Alternatively, the electrical heating means according to the invention extends from the top of the at least one main melting tank (for example, maintained commonly by a water-cooled holder) and are immersed. These "top electrodes" are advantageously located along the edge of the melting tank and/or at the corner(s).

The number of electrodes in the invention is for example designed in order to limit maximum power for each electrode to 400kW, by respecting a maximum current density of 1.5A/cm² at the electrode surface. For example, in the case of immersed electrodes, height is between 0.3 and 0.8 times glass melt height.

According to the invention, the electrical input fraction ranges from 50% to 85%. By "electrical input fraction" according to the invention, it is meant the part of electricity in the total energy input of the process/furnace for the melting/fining, namely electricity/(fuel+electricity), the total energy input being that of the process/furnace in standard/normal production mode, i.e. at its standard pull range (excluding periods of start-up, maintenance, hot repair, culleting,...).

According to the invention and as illustrated at FIG.1, the process comprises a step of fining the melt (namely the melt coming from the main melting tank(s) and the auxiliary melting tank(s)) in the fining tank by heating with the oxy-combustion heating means alimented with gas and/or hydrogen. The term "gas" herein includes, but not only, natural gas, synthetic gas and biogas. Natural gas is the most widely used presently for practical, economical and availability reasons.

By "oxy-combustion means" according to the invention, it is meant combustion means supplied with gaseous oxygen (O₂) as comburant. Generally, O₂ gas comburant supplied to glass melting furnaces is at least 90% purity, or even at least 95% purity. An advantage of using gaseous oxygen as comburant, compared to using air, is the drastic decrease of the so-called « NOx » pollutants appearing during the combustion. Even if they could still be present in the flue gas (depending on the O₂ purity and amount of parasitic air), it will be in very low amounts.

Oxy-combustion heating means according to the invention may be composed of burners, advantageously arranged along the side walls of said tank on each side thereof to spread the flames over practically the entire width of the tank. The burners may be spaced from one another in order to distribute the energy supply over a portion (i.e. ^{~}50% of the length) of the fining tank. They are also commonly arranged in rows on either side of the tank.

According to the invention, the oxy-combustion heating means are alimented with gas and/or hydrogen. In an embodiment, the oxy-combustion heating means are alimented with at least 50% hydrogen and preferably, at least 80% hydrogen. More preferably, the oxy-combustion heating means are alimented with 100% hydrogen. This is advantageous as it allows to decrease drastically to global CO₂ emission of the process. In an alternative, the oxy-combustion heating means are alimented with more than 50% gas and preferably, at least 80% gas, or even at least 100% gas. This is advantageous as it allows notably to limit impact on the chemistry of glass and on furnace refractory materials. In a specific and advantageous embodiment of the invention, the oxy-combustion heating means are alimented with 50% gas and 50% hydrogen.

According to the invention and as illustrated at FIG.1, the process comprises a step of flowing the melt from the fining tank to a working zone trough the outlet mean(s).

According to the invention, the outlet mean(s) is/are located downstream of the fining tank, for the melted glass to reach a working zone. According to an embodiment, the outlet mean(s) is/are composed usually of a neck, in order to lead the melt towards a working zone commonly called "working end". Alternatively, the outlet mean(s) is/are composed of a throat, in order to lead the melt towards a working zone including, for example, forehearth(s). The working zone according to the invention may comprise, for example, a conditioning zone in which thermal conditioning by controlled cooling is carried out prior to glass melt leaving said zone through an outlet to a forming zone. Such a forming zone may comprise, for example, a float installation and/or a rolling installation.

According to another advantageous embodiment, the furnace of the invention may comprise a removable wall located at the neck (e.g. a skimbar coming from the side wall of the neck), in order to (i) possibly stop unmelted vitrifiable materials (cullet) that could arrive at the end of the melting tank and thereby avoid their passing through the neck towards the fining tank and (ii) control the intensity of or annihilate the backward flow of the glass melt from the fining towards the melting tank.

According to still another advantageous embodiment of the invention, the furnace may comprise a removable wall located at the neck (e.g. a shadow wall passing through the crown of the neck) in order to increase segmentation of melting and fining tanks in terms of atmosphere and heat radiations.

According to an advantageous embodiment of the invention, the process comprises further a step of cullet pre-heating, at least partially by recovering heat from the furnace, before charging said cullet in the at least one main melting tank and/or in the at least one auxiliary melting tank. According to this embodiment, recovering heat from the furnace may be carried out from flue gas coming from (i) the melting tank(s), or (ii) the fining tank or (iii) from the whole furnace (thereby including flue gas from the melting, auxiliary and/or main one(s), and fining tanks).

According to this embodiment also, if only a part of the cullet is melted at the step of melting in the auxiliary melting tank and if the remaining part of the cullet (to be charged in the main melting tank) is pre-heated, the vitrifiable materials are charged in the at least one main melting tank either together with the pre-heated cullet through same inlet mean(s) (this implies therefore that both type of materials are mixed before charging) or independently of the pre-heated cullet, through different inlet mean(s).

Preferably, according to this embodiment, the maximum temperature of the cullet at the step of cullet pre-heating is 450°C. This allows to avoid clogging issues.

According to an embodiment, the step of cullet pre-heating may be carried out in at least one cullet pre-heater, for example, of the type of one of those described in US5526580 or DE3716687.

Advantageously, the at least one cullet pre-heater may be located at upstream part of the at least one main melting tank and/or of the at least one auxiliary melting tank, either in the width of said tank or laterally in its length. Advantageously and in particular for the at least one main melting tank, the step of cullet pre-heating may be carried out in at least two cullet pre-heaters located, for example, at upstream part of the main melting tank, in its width or laterally in its length on both sides. For example, the step of cullet pre-heating may be carried out in four cullet pre-heaters located at upstream part of the main melting tank, distributed in its width or laterally in its length (for example, two on each side). For example also, the step of cullet pre-heating may be carried out in six cullet pre-heaters located at upstream part of the main melting tank, in its width or laterally in its length (for example, three on each side), or also in eight cullet pre-heaters located at upstream part of the main melting tank, in its width or laterally in its length (for example, four on each side).

According to still another advantageous embodiment of the invention, the raw materials in the vitrifiable materials comprise less than 25% in weight of carbonate compounds. By "carbonate compounds", it is meant for example alkali carbonates and alkaline earth carbonates. Preferably, the vitrifiable materials comprise less than 20% in weight of carbonate compounds, and more preferably less than 10%, and even less than 5%. The vitrifiable materials may be advantageously free of any carbonate compound.

This embodiment is advantageous as it allows to reduce the part of CO₂ emission occurring from the decarbonization of raw materials, compared to classical glass meting process where sodium carbonate Na₂CO₃, limestone CaCO₃ and dolomite CaMg(CO₃)₂ are generally essentially used as sources of sodium and calcium. According to this embodiment, the alkali and alkaline earth sources may advantageously be present, at least partially, in the form of oxides or hydroxides such as CaO, CaO.MgO (dolime), Ca(OH)₂, Mg(OH)₂, NaOH, KOH.

According to a very preferred embodiment of the invention, the process for melting vitrifiable materials to produce flat glass comprises the steps of :
- providing a furnace comprising (i) at least one main melting tank comprising electrical heating means, (ii) at least one auxiliary melting tank, (iii) a fining tank provided with oxycombustion heating means, (iv) at least one neck separating the at least one main melting tank and the fining tank, (v) inlet mean(s) located at the at least one main melting tank, (vi) outlet mean(s) located downstream of the fining tank;
- charging vitrifiable materials, comprising raw materials and optionally cullet, in the at least one main melting tank with the inlet mean(s);
- charging cullet in the at least one auxiliary melting tank;
- cullet pre-heating, at least partially by recovering heat from the furnace, before charging said cullet in the at least one main melting tank and/or in the at least one auxiliary melting tank;
- melting the charged vitrifiable materials in the at least one main melting tank by heating with the electrical heating means and flowing the melt to the fining tank through the neck,
- melting the charged cullet in the at least one auxiliary melting tank and flowing the melt to the neck or to the fining tank;
- fining the melt in the fining tank by heating with the oxy-combustion heating means alimented with gas and/or hydrogen; and
- flowing the melt from the fining tank to a working zone trough the outlet mean(s).
wherein the electrical input fraction of the process ranging from 50% to 85% and wherein said vitrifiable materials comprising (i) raw materials with less than 25% in weight of carbonate compounds and (ii) cullet in an amount of at least 10% in weight of the total amount of vitrifiable materials.

All previously described specific embodiments related to each step of the process of the invention applies to this last very preferred embodiment.

## Claims

1. Process for melting vitrifiable materials to produce flat glass, comprising the steps of :
- providing a furnace comprising (i) at least one main melting tank comprising electrical heating means, (ii) at least one auxiliary melting tank, (iii) a fining tank provided with oxycombustion heating means, (iv) at least one neck separating the at least one main melting tank and the fining tank, (v) inlet mean(s) located at the at least one main melting tank, (vi) outlet mean(s) located downstream of the fining tank;
- charging vitrifiable materials, comprising raw materials and optionally cullet, in the at least one main melting tank with the inlet mean(s);
- charging cullet in the at least one auxiliary melting tank;
- melting the charged vitrifiable materials in the at least one main melting tank by heating with the electrical heating means and flowing the melt to the fining tank through the neck;
- melting the charged cullet in the at least one auxiliary melting tank;
- fining the melt in the fining tank by heating with the oxy-combustion heating means alimented with gas and/or hydrogen;
- flowing the melt from the fining tank to a working zone trough the outlet mean(s);
**characterized in that** :
(i) its electrical input fraction ranges from 50% to 85% ;
(ii) the total amount of cullet is at least 10% in weight of the total amount of vitrifiable materials; and
(iii) it comprises a step of flowing the melt from the at least one auxiliary melting tank to the neck or to the fining tank.

2. Process according to preceding claim, **characterized in that** the total amount of cullet is at least 20% in weight of the total amount of vitrifiable materials.

3. Process according to the preceding claim, **characterized in that** the total amount of cullet is at least 40% in weight of the total amount of vitrifiable materials.

4. Process according to preceding claims, **characterized in that** it comprises a step of melting the charged cullet in the at least one auxiliary melting tank and flowing the melt to the neck.

5. Process according to preceding claims, **characterized in that** the cullet charged in the at least one auxiliary melting tank represents at least 2% in weight of the total amount of cullet charged in the furnace.

6. Process according to the preceding claim, **characterized in that** the cullet charged in the at least one auxiliary melting tank represents at least 10% in weight of the total amount of cullet charged in the furnace.

7. Process according to preceding claims, **characterized in that** the oxy-combustion heating means are alimented with at least 50% hydrogen and preferably, at least 80% hydrogen.

8. Process according to preceding claims, **characterized in that** it comprises further a step of cullet pre-heating, at least partially by recovering heat from the furnace, before charging cullet in the at least one main melting tank and/or in the at least one auxiliary melting tank.

9. Process according to the preceding claim, **characterized in that** the maximum temperature of cullet at the step of cullet pre-heating is 450°C.

10. Process according to preceding claims, **characterized in that** the raw materials in the vitrifiable materials comprise less than 25% in weight of carbonate compounds.

11. Furnace for carrying out the process of claims 1-10.

## Patentansprüche

1. Verfahren zum Schmelzen von verglasbaren Materialien zur Herstellung von Flachglas, umfassend die Schritte:
- Bereitstellen eines Ofens umfassend (i) wenigstens einen Hauptschmelztank, der elektrische Heizmittel umfasst, (ii) wenigstens einen Hilfsschmelztank, (iii) einen Läutertank, der mit Sauerstoffverbrennungsheizmitteln ausgestattet ist, (iv) wenigstens einen Hals, der den wenigstens einen Hauptschmelztank und den Läutertank trennt, (v) ein oder mehrere Einlassmittel, die an dem wenigstens einen Hauptschmelztank angeordnet sind, und (vi) ein oder mehrere Auslassmittel, die stromabwärts des Läutertanks angeordnet sind;
- Laden von verglasbaren Materialien, die Rohmaterialien und gegebenenfalls Bruchglas umfassen, in den wenigstens einen Hauptschmelztank mit dem oder den Einlassmitteln;
- Laden von Bruchglas in den wenigstens einen Hilfsschmelztank;
- Schmelzen der geladenen verglasbaren Materialien in dem wenigstens einen Hauptschmelztank durch Erhitzen mit den elektrischen Heizmitteln und Leiten der Schmelze durch den Hals in den Läutertank;
- Schmelzen des geladenen Bruchglases in dem wenigstens einen Hilfsschmelztank;
- Läutern der Schmelze in dem Läutertank durch Erhitzen mit den mit Gas und/oder Wasserstoff gespeisten Sauerstoffverbrennungsheizmitteln;
- Leiten der Schmelze aus dem Läutertank in eine Bearbeitungszone durch das/die Auslassmittel;
**dadurch gekennzeichnet, dass**:
(i) sein elektrischer Eingangsanteil in dem Bereich von 50 % bis 85 % liegt;
(ii) die Gesamtmenge an Bruchglas wenigstens 10 Gew.-% der Gesamtmenge an verglasbaren Materialien beträgt; und
(iii) es einen Schritt des Leitens der Schmelze aus dem wenigstens einen Hilfsschmelztank zu dem Hals oder zu dem Läutertank umfasst.

2. Verfahren nach dem vorstehenden Anspruch, **dadurch gekennzeichnet, dass** die Gesamtmenge an Bruchglas wenigstens 20 Gew.-% der Gesamtmenge von verglasbaren Materialien beträgt.

3. Verfahren nach dem vorstehenden Anspruch, **dadurch gekennzeichnet, dass** die Gesamtmenge an Bruchglas wenigstens 40 Gew.-% der Gesamtmenge von verglasbaren Materialien beträgt.

4. Verfahren nach vorstehenden Ansprüchen, **dadurch gekennzeichnet, dass** es einen Schritt des Schmelzens des geladenen Bruchglases in dem wenigstens einen Hilfsschmelztank und des Leitens der Schmelze zu dem Hals umfasst.

5. Verfahren nach vorstehenden Ansprüchen, **dadurch gekennzeichnet, dass** das in den wenigstens einen Hilfsschmelztank geladene Bruchglas wenigstens 2 Gew.-% der Gesamtmenge des in den Ofen geladenen Bruchglases darstellt.

6. Verfahren nach dem vorstehenden Anspruch, **dadurch gekennzeichnet, dass** das in den wenigstens einen Hilfsschmelztank geladene Bruchglas wenigstens 10 Gew.-% der Gesamtmenge des in den Ofen geladenen Bruchglases darstellt.

7. Verfahren nach vorstehenden Ansprüchen, **dadurch gekennzeichnet, dass** die Sauerstoffverbrennungsheizmittel mit wenigstens 50 % Wasserstoff und vorzugsweise wenigstens 80 % Wasserstoff gespeist werden.

8. Verfahren nach vorstehenden Ansprüchen, **dadurch gekennzeichnet, dass** es ferner einen Schritt des Vorheizens von Bruchglas, wenigstens teilweise durch Rückgewinnung von Wärme aus dem Ofen, vor dem Füllen von Bruchglas in den wenigstens einen Hauptschmelztank und/oder in den wenigstens einen Hilfsschmelztank umfasst.

9. Verfahren nach dem vorstehenden Anspruch, **dadurch gekennzeichnet, dass** die Höchsttemperatur von Bruchglas bei dem Schritt des Vorheizens von Bruchglas 450 °C beträgt.

10. Verfahren nach vorstehenden Ansprüchen, **dadurch gekennzeichnet, dass** die Rohmaterialien in den verglasbaren Materialien weniger als 25 Gew.-% Carbonatverbindungen umfassen.

11. Ofen zur Durchführung des Verfahrens nach Ansprüchen 1-10.

## Revendications

1. Procédé pour la fusion de matières vitrifiables pour produire du verre plat, comprenant les étapes de :
- mise à disposition d'un four comprenant (i) au moins une cuve de fusion principale comprenant des moyens de chauffage électriques, (ii) au moins une cuve de fusion auxiliaire, (iii) une cuve d'affinage pourvue de moyens de chauffage par oxycombustion, (iv) au moins un col séparant l'au moins une cuve de fusion principale et la cuve d'affinage, (v) un ou plusieurs moyens d'entrée situés au niveau de l'au moins une cuve de fusion principale et (vi) un ou plusieurs moyens de sortie situés en aval de la cuve d'affinage ;
- chargement de matières vitrifiables, comprenant des matières premières et éventuellement du calcin, dans l'au moins une cuve de fusion principale avec le ou les moyens d'entrée ;
- chargement de calcin dans l'au moins une cuve de fusion auxiliaire ;
- fusion des matières vitrifiables chargées dans l'au moins une cuve de fusion principale par chauffage avec les moyens de chauffage électrique et écoulement de la masse fondue vers la cuve d'affinage à travers le col,
- fusion du calcin chargé dans l'au moins une cuve de fusion auxiliaire ;
- affinage de la masse fondue dans la cuve d'affinage par chauffage avec les moyens de chauffage par oxycombustion alimentés avec du gaz et/ou de l'hydrogène ;
- écoulement de la masse fondue de la cuve d'affinage vers une zone de travail en passant par le ou les moyens de sortie ;
**caractérisé en ce que** :
(i) sa fraction d'apport d'énergie électrique va de 50 % à 85 % ;
(ii) la quantité totale de calcin est d'au moins 10 % en poids de la quantité totale de matières vitrifiables ; et
(iii) il comprend une étape d'écoulement de la masse fondue depuis l'au moins une cuve de fusion auxiliaire vers le col ou vers la cuve d'affinage.

2. Procédé selon la revendication précédente, **caractérisé en ce que** la quantité totale de calcin est d'au moins 20 % en poids de la quantité totale de matières vitrifiables.

3. Procédé selon la revendication précédente, **caractérisé en ce que** la quantité totale de calcin est d'au moins 40 % en poids de la quantité totale de matières vitrifiables.

4. Procédé selon les revendications précédentes, **caractérisé en ce qu'**il comprend une étape de fusion du calcin chargé dans l'au moins une cuve de fusion auxiliaire et d'écoulement de la masse fondue vers le col.

5. Procédé selon les revendications précédentes, **caractérisé en ce que** le calcin chargé dans l'au moins une cuve de fusion auxiliaire représente au moins 2 % en poids de la quantité totale de calcin chargée dans le four.

6. Procédé selon la revendication précédente, **caractérisé en ce que** le calcin chargé dans l'au moins une cuve auxiliaire de fusion représente au moins 10 % en poids de la quantité totale de calcin chargée dans le four.

7. Procédé selon les revendications précédentes, **caractérisé en ce que** les moyens de chauffage par oxycombustion sont alimentés avec au moins 50 % d'hydrogène et de préférence, au moins 80 % d'hydrogène.

8. Procédé selon les revendications précédentes, **caractérisé en ce qu'**il comprend en outre une étape de préchauffage de calcin, au moins en partie par récupération de chaleur du four, avant le chargement du calcin dans l'au moins une cuve de fusion principale et/ou dans l'au moins une cuve de fusion auxiliaire.

9. Procédé selon la revendication précédente, **caractérisé en ce que** la température maximale du calcin au niveau de l'étape de préchauffage de calcin est de 450 °C.

10. Procédé selon les revendications précédentes, **caractérisé en ce que** les matières premières dans les matières vitrifiables comprennent moins de 25 % en poids de composés de carbonate.

11. Four pour la mise en œuvre du procédé selon les revendications 1 à 10.
